# NEUE EUROPÄISCHE PATENTSCHRIFT

(11) **EP 1 648 584 B2**
(45) Veröffentlichungstag und Bekanntmachung des Hinweises auf die Entscheidung über den Einspruch: **28.06.2017**
(45) Hinweis auf die Patenterteilung: 27.02.2013
(21) Anmeldenummer: 04762424.2
(22) Anmeldetag: 20.07.2004
(51) Int. Cl.: B01D 35/00, F02M 37/22

(54) **KRAFTSTOFFFILTER**
FUEL FILTER
FILTRE A CARBURANT

(30) Priorität: 22.07.2003 DE 10333185
(43) Veröffentlichungstag der Anmeldung: 26.04.2006
(73) Patentinhaber: ROBERT BOSCH GMBH, 70442 Stuttgart (DE)
(72) Erfinder: ARTECHE, Julen, Burgoa, 81825 München (DE); BENITEZ, Cesar Garcia, E-28028 Madrid (ES); TORRES, Enrique Casillas, E-28017 Madrid (ES); DE LA AZUELA, Julian, E-28006 Madrid (ES); ROPERO, Candido Juara, E-28806 Alcala de Henares (ES); GIL, Teresa Serrano, E-28700 Madrid (ES)
(86) Internationale Anmeldenummer: PCT/DE2004/001574
(87) Internationale Veröffentlichungsnummer: WO 2005/009588

(56) Entgegenhaltungen:
- EP-A- 0 943 796
- EP-A- 1 174 170
- EP-A2- 0 018 282
- WO-A-96/19658
- DE-A- 10 039 425
- DE-A1- 19 731 766
- GB-A- 1 423 529
- GB-A- 2 082 080
- JP-A- S 509 864

## Beschreibung

Die Erfindung betrifft einen Kraftstofffilter mit mindestens einem Filterelement und Anschlüssen für die Kraftstoffzufuhr und den Kraftstoffauslass.

Ein solcher Kraftstofffilter ist aus der DE 198 11 689 A1 bekannt. Das Gehäuse des Kraftstofffilters ist aus Vollkunststoff ausgeführt und weist ein becherförmiges Unterteil und ein deckelartiges Oberteil auf, das mittels Schnellverschluss lösbar auf dem becherförmigen Unterteil befestigt ist. Das becherartige untere Gehäuseteil nimmt einen hohlzylindrischen Sternfiltereinsatz auf, der auf einem Sockelabschnitt aufsitzt. Im Sockelabschnitt ist ein Sumpf für bei der Filtrierung des Kraftstoffs abgeschiedenes Wasser sowie ein über einen mit einer Verschlussschraube verschließbaren Wasserablass vorgesehen. Darüber hinaus ist am Sockelbereich ein Kraftstoffzulauf angeordnet, der in einen Zuströmkanal für eine unterhalb des Sockelabschnitts geschweißte Heizeinrichtung mündet. Auch ist im Sockelabschnitt ein Abströmkanal vorgesehen, durch den der Kraftstoff von der Heizeinrichtung auf die Schmutzseite des Filters gelangt. Der Filtereinsatz wird radial von außen nach innen durchströmt. Seine Reinseite steht in Verbindung mit einem Ablaufstutzen, über den der gereinigte Kraftstoff über einen ersten Kanal in Richtung zum Motor abgeführt werden kann. Darüber hinaus ist im Ablaufstutzen ein zweiter Kanal vorgesehen, der über ein Überströmventil verschließbar und über den eine Kraftstoffrückführung in den Tank möglich ist. Die Reinseite des Filters steht auch mit dem Sumpf in Verbindung.

Solche Kraftstofffilter werden unter anderem bei Motoren für Kraftfahrtzeuge verwendet.

Ein Problem dieser vorbekannten Filter besteht darin, dass sie vergleichsweise sperrig sind und schlecht im Motorraum eines Fahrzeugs integriert werden können.

Die DE 10 39 425A1 zeigt eine Filtereinrichtung für einen Hochdruckbereich eines Speichereinspritzsystems, wobei in dem Hochdruckbereich eine Filtereinrichtung angeordnet ist. Dabei ist die Filtereinrichtung z.B. als Endverschluss für eine gemeinsame Hochdruckleitung ausgebildet oder als Filter in der Hochdruckleitung angeordnet.

Insofern besteht die Aufgabe der vorliegenden Erfindung darin, einen Kraftstofffilter zu entwickeln, bei dem eine kompakte Bauweise möglich ist. Diese Aufgabe wird bei einem Kraftstofffilter der eingangs genannten Art dadurch gelöst, dass das Filterelement flach ausgebildet ist und ein gefaltetes Filtermaterial enthält.

Es wurde überraschender Weise festgestellt, dass anstelle von Sternfiltereinsätzen flache Filterelemente verwendet werden können, bei denen die Reinseite und die Schmutzseite im wesentlichen parallel zueinander angeordnet sind. Hierdurch wird es möglich, den Kraftstoff filter als Ganzes flach auszubilden und damit wesentlich flacher, als es bei Verwendung von Sternfiltereinsätzen bei gleicher Durchflussleistung möglich wäre. Hierdurch ergibt sich eine wesentlich größere konstruktive Vielfalt, so dass die Form des Kraftstofffilters wesentlich besser an den im Motorraum zur Verfügung stehenden Raum angepasst werden kann.

Aufgrund der Faltung des Filtermaterials erhält man vorteilhafterweise bei großer Oberfläche ein blockartiges bzw. quaderförmiges Filterelement mit guter Stabilität.

Erfindungsgemäß ist die Reinseite des Filterelements gekapselt und mit dem Kraftstoffauslass verbunden. Eine solche Kapselung kann beispielsweise aus Kappen zur Abdeckung der Oberseite und der oberen und unteren Stirnseiten des Filterelements sowie aus einer die Reinseite des Filterelements umschließenden Seitenwandung, beispielsweise jeweils aus Kunststoff, bestehen. Ein derart ausgebildetes Filterelement kann einfach in ein Kraftstofffiltergehäuse eingesetzt werden, ohne dass eine zusätzliche Abdichtung der Reinseite des Filterelements gegenüber seiner Schmutzseite notwendig ist. Somit werden zusätzliche konstruktive Maßnahmen und Bauteile innerhalb des Gehäuses zur Trennung von Reinseite und Schmutzseite überflüssig, wobei das gekapselte Filterelement weitestgehend vollständig von der Schmutzseite des Filters umgeben ist.

In einer weiteren Ausgestaltung des erfindungsgemäßen Kraftstofffilters sind zwei oder mehr Filterelemente vorgesehen, die beispielsweise zueinander an ihren oberen, unteren oder seitlichen Stirnseiten benachbart und im wesentlichen in einer Ebene angeordnet, aber auch in zueinander in einem Winkel stehenden Ebenen angeordnet sein können.

In einer darüber hinaus bevorzugten Ausgestaltung der Erfindung sind der Kraftstoffeinlass und der Kraftstoffauslass an einer oder an gegenüberliegenden Stirnseiten des Kraftstofffilters angeordnet. Auf diese Weise kann sichergestellt werden, dass der Vorteil einer flachen Bauweise nicht durch den Kraftstofffilter überragende Anschlüsse zunichte gemacht wird.

In einer weiteren bevorzugten Ausgestaltung ist die Strömungseinleitung des Kraftstoffs in das Kraftstofffiltergehäuse so ausgeführt, dass insbesondere bei horizontal angeordnetem Kraftstofffilter Turbulenzen im Bereich seines Bodens verringert oder eliminiert werden. Als besonders effektiv hat sich der Einsatz einer Strömungsplatte im Bereich des Kraftstoffeinlasses erwiesen, die vorzugsweise schräg nach oben gerichtet ist und die Strömung somit zur Oberseite des Kraftstofffiltergehäuses hin lenkt.

Die zulaufseitige Verteil-Beruhigungseinrichtung sorgt auf vorteilhafte Weise für besonders gute Filtriereigenschaften des Kraftstofffiters bei insgesamt erstaunlich geringem notwendigem Bauvolumen des Kraftstofffilters.

Im folgenden wird die Erfindung anhand von Figuren, in denen bevorzugte, besonders vorteilhafte Ausführungsbeispiele dargestellt sind, näher erläutert. Es zeigen:
- Figur 1: eine perspektivische Darstellung eines ersten Ausführungsbeispiels des erfindungsgemäßen Kraftstofffilters,
- Figur 2: eine Aufsicht auf den in Figur 1 dargestellten Kraftstofffilter,
- Figur 3: den Kraftstofffilter im Schnitt entlang der Schnittlinie A-A gemäß Figur 2,
- Figur 4: den Kraftstofffilter im Schnitt entlang der Schnittlinie B-B gemäß Figur 2,
- Figur 5: eine perspektivische Darstellung einer anderen Ausführungsform des erfindungsgemäßen Kraftstofffilters,
- Figur 6: eine stirnseitige Ansicht eines weiteren Ausführungsbeispiels des erfindungsgemäßen Kraftstoffilters,
- Figur 7: eine Ansicht der in der Figur 6 abgebildeten gegenüberliegenden Stirnseite,
- Figur 8: einen Querschnitt durch den Kraftstofffilter des dritten Ausführungsbeispiels,
- Figur 9: einen Längsschnitt durch den Kraftstofffilter entlang der in der Figur 6 mit IX-IX markierten Ebene,
- Figur 10: einen Längsschnitt durch den Kraftstofffilter entlang einer in der Figur 7 mit X-X markierten Ebene,
- Figur 11: einen Längsschnitt durch den Kraftstofffilter entlang der in der Figur 7 mit XI-XI markierten Schnittebene.

Der vorgeschlagene Kraftstofffilter ist besonders geeignet zum Filtern von Kraftstoff, insbesondere von Dieselkraftstoff einer Kraftstoffversorgung einer Brennkraftmaschine eines Kraftfahrzeugs.

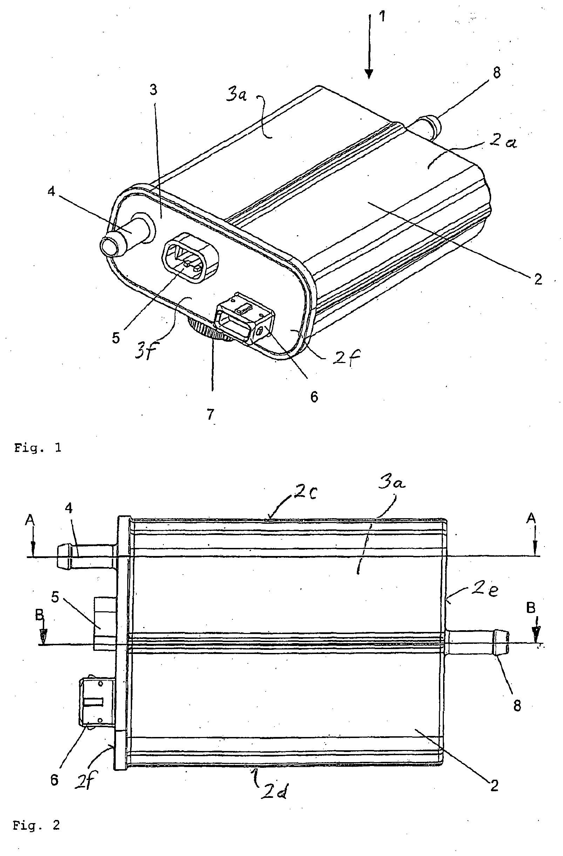

Die Figuren 1 bis 4 zeigen unterschiedliche Ansichten und Schnitte eines ersten, bevorzugt ausgewählten, besonders vorteilhaften Ausführungsbeispiels eines flachen Kraftstofffilters 1.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte bei allen Figuren und allen Ausführungsbeispielen. Sofern sich aus den Erläuterungen nichts anderes ergibt, sind die Einzelheiten der verschiedenen Ausführungsbeispiele miteinander kombinierbar.

Die Figuren 1 bis 4 zeigen den flachen Kraftstofffilter 1 in einer im wesentlichen horizontalen Ausrichtung. Der Kraftstofffilter 1 hat ein Filtergehäuse 2. Das Filtergehäuse 2 hat eine obere Seitenwand 2a, eine untere Seitenwand 2b, eine erste seitliche Längswand 2c und parallel dazu eine zweite seitliche Längswand 2d, eine erste Stirnseite 2e und eine gegenüberliegende zweite deckelseitige Stirnseite 2f. Das Filtergehäuse 2 ist im Wesentlichen zusammengesetzt aus einem Gehäuseteil 3a und einem Deckel 3f. Das Gehäuseteil 3a hat im Wesentlichen die Form eines blockartigen bzw. quaderförmigen Bechers und bildet im Wesentlichen die Seiten 2a, 2b, 2c, 2d und 2e des Filtergehäuses 2. An der Stirnseite 2f des Filtergehäuses 2 ist das Gehäuseteil 3a von einem Deckel 3f abgeschlossen.

Das Filtergehäuse 2 weist eine sich länglich und flach erstreckende Form auf, deren vordere Stirnseite 2f mit dem Deckel 3f verschlossen ist. An der Außenseite des Deckels 3f sind ein Anschluss 4 für den Kraftstoffeinlass, ein elektrischer Anschluss 5 für eine Heizeinheit sowie ein elektrischer Anschluss 6 für einen Temperatursensor vorgesehen. An der Unterseite des Filtergehäuses 2, genauer gesagt an der unteren Seitenwand 2b, ist zur mit dem Deckel 3f verschlossenen Stirnseite 2f hin ein Wasserauslass 7 angeordnet. An der dem Deckel 3f gegenüberliegenden Stirnseite 2e des Gehäuseteils 3a des Filtergehäuses 2 befindet sich ein Anschluss 8 für den Kraftstoffauslass.

Das Filtergehäuses 2 ist mehr als doppelt so breit und mehr als dreimal so lang wie hoch. Das Filtergehäuses 2 hat, zumindest grob betrachtet, eine annähernd blockartige oder quaderartige Form.

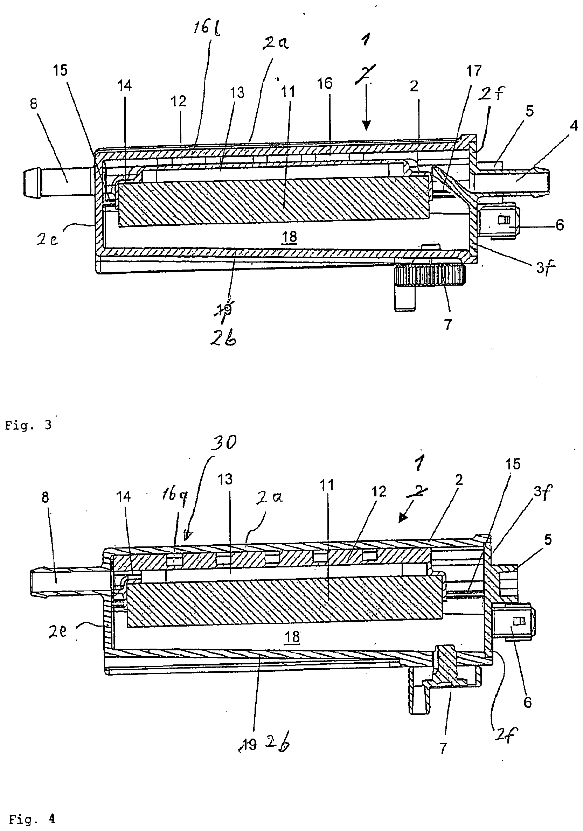

Der Anschluss 8 für den Kraftstoffauslass erstreckt sich, wie insbesondere in den Figuren 2 und 3 zu sehen ist, in einer zur Längsachse vertikalen Ebene, während der Anschluss 4 für den Kraftstoffeinlass in einer zu dieser parallel verlaufenden Ebene nahe der Längswand 2c des Filtergehäuses 2 verläuft.

Wie sich aus den Schnitten in Figuren 3 und 4 entnehmen lässt, ist innerhalb des Filtergehäuses 2 ein sich horizontal erstreckender Filtereinsatz mit einem Filterelement 11 angeordnet. Das Filterelement 11 ist flach ausgebildet. Das Filterelement 11 ist blockförmig gestaltet. Das Filterelement 11 passt somit sehr gut in das blockförmige Filtergehäuse 2. Die Oberseite des Filterelements 11 ist durch eine Wandung 12 vollständig eingekapselt, wobei die Wandung 12 zusammen mit dem Filterelement 11 eine Reinseite 13 des Kraftstofffilters einschließt. Die Reinseite 13 ist im Wesentlichen oberhalb des Filterelements 11 zwischen dem Filterelement 11 und der Wandung 12. Die Reinseite 13 ist über ein Kanalstück 14 mit dem Anschluss 8 für den Kraftstoffauslass verbunden. Das Filterelement 11 ist innerhalb des Filtergehäuses 2 in an den Seitenwänden vorgesehenen Führungsschienen 15 eingesetzt.

Das Filterelement 11 zusammen mit der Wandung 12 bilden einen Filtereinsatz. Der den gesamten Filtereinsatz umgebende Raum im Filtergehäuse 2 dient als Schmutzseite des Filters 1. Der Kraftstoff strömt von unten nach oben durch das Filterelement 11, von der Schmutzseite zur Reinseite 13.

Während die Wandung 12 über weite Bereiche an der oberen Seitenwand 2a des Filtergehäuses 2 anliegt, erstreckt sich im Bereich des Anschlusses 4 für den Kraftstoffeinlass in Längsrichtung des Filtergehäuses 2 ein Spalt 16 zwischen der Wandung 12 und der oberen Seitenwand 2a des Filtergehäuses 2. Im Bereich des Anschlusses 4 für den Kraftstoffeinlass ist ein Strömungsleitblech 17 vorgesehen, das den in das Filtergehäuse 2 eintretenden Kraftstoff in diesen Spalt 16 lenkt, so dass sich der Kraftstoff von dort im Filtergehäuse 2 verteilt. Hierdurch wird die Strömungsgeschwindigkeit des Kraftstoffs wesentlich herabgesetzt und Turbulenzen insbesondere im Bodenbereich 18 des Filtergehäuses 2 vermieden.

Zwischen der Wandung 12 und der oberen Seitenwand 2a können längs und/oder quer und/oder schräg und/oder diagonal verlaufende Rillen vorgesehen sein. Die Rillen können alle oder nur ein Teil an der Wandung 12 und/oder an der oberen Seitenwand 2a angebracht sein. Die Rillen gehören zum Spalt 16. Beim ausgewählten Ausführungsbeispiel hat es an der Wandung 12 auf der der Seitenwand 2a zugewandten Seite mehrere parallele Längsrillen 161 und parallele Querrillen 16q. Die Längsrillen 161 und die Querrillen 16q verlaufen ungefähr rechtwinklig zueinander. Mit diesen Rillen kann die gleichmäßige Verteilung des Kraftstoff über die Breite des Filters verbessert werden.

Die untere Seitenwand 2b des Filtergehäuses 2 fällt zum Wasserauslass 7 hin ab und bildet so einen Sumpf für Wasser, das an der Schmutzseite des Filterelements 11 abgeschieden wird und sich aufgrund seines höheren spezifischen Gewichts im Bereich des Wasserauslasses 7 sammelt.

Bei dem vorgeschlagenen Kraftstofffilter 1 ist der Deckel 3f des Filtergehäuses 2 mit dem Gehäuseteil 3a des Filtergehäuses 2 fest, dicht und unlösbar verbunden. Das Gehäuseteil 3a und der Deckel 3f können beispielsweise aus Metall oder aus Kunststoff bestehen. Abhängig vom Werkstoff des Gehäuseteils 3a und des Deckels 3f sind diese Teile beispielsweise durch Schweißen, durch Ultraschallschweißen, durch Vibrationsschweißen, durch Reibschweißen, durch Aufbringen von Hitze oder durch Bördelung miteinander fest verbunden. Es ist aber auch möglich, den Deckel 3f an dem Gehäuseteil 3a dicht aber lösbar zu befestigen, so dass das Filterelement 11 in dem Filtergehäuse 2 bei Bedarf ausgetauscht werden kann.

Dieser Kraftstofffilter 1 eignet sich insbesondere für den horizontalen Einbau in einem Kraftfahrzeug.

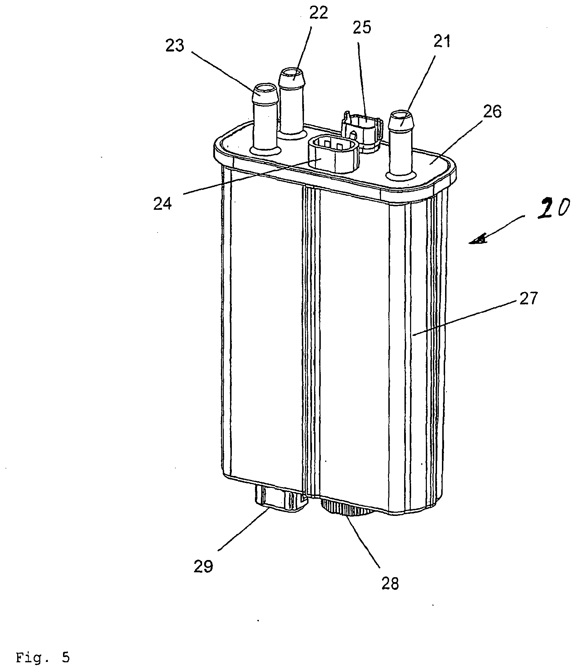

In Figur 5 ist ein ähnlicher Kraftstofffilter 20 dargestellt, der sich gegenüber dem zuvor beschriebenen Kraftstofffilter 1 dadurch unterscheidet, dass er für den vertikalen Einsatz konzipiert ist, wobei sämtliche Anschlüsse 21, 22, 23 für den Kraftstoffeinlass und für den Kraftstoffauslass sowie die elektrischen Anschlüsse 24, 25 für eine Heizeinheit und einen Temperatursensor an der als Deckel 26 ausgebildeten oberen Stirnseite des Filtergehäuses 27 angeordnet sind. Einer der Anschlüsse 22, 23 für den Kraftstoffauslass dient als Kraftstoffrückführung zum Tank und ist mit einem Überströmventil an der Innenseite des Deckels 26 verbunden.

Lediglich an seinem Boden sind ein Wasserauslass 28 und ein Anschluss 29 für einen Wasserstandssensor zum Bestimmen des Wasserstandes im Gehäuseinneren vorgesehen.

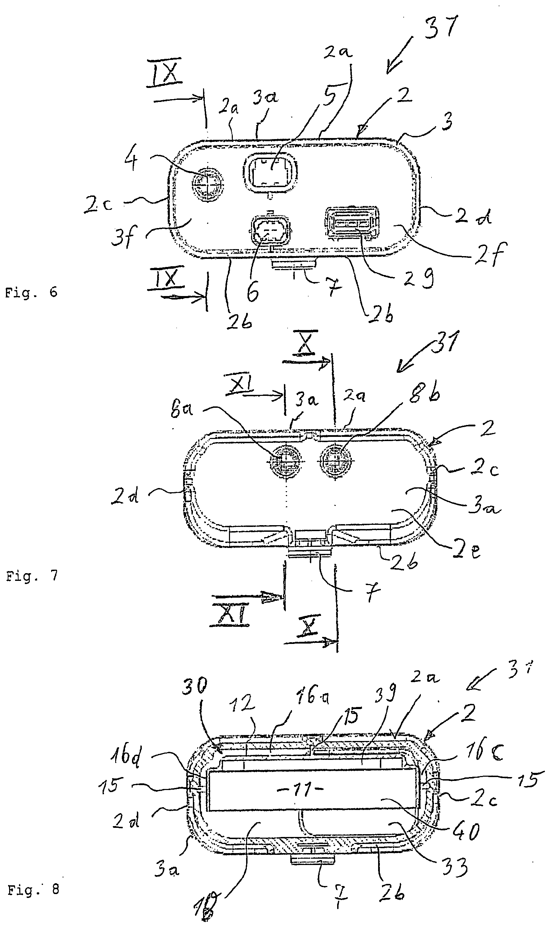

Die Figuren 6 bis 11 zeigen unterschiedliche Ansichten und Schnitte eines weiteren, bevorzugt ausgewählten, besonders vorteilhaften Ausführungsbeispiels eines flachen Kraftstofffilters 31.

Wie die Figur 7 zeigt, hat der Kraftstofffilter 31 eine im Wesentlichen in etwa rechteckige Stirnseite 2e, und wie die Figur 6 zeigt, eine im Wesentlichen in etwa rechteckige Stirnseite 2f. Zum Einsetzen des Filterelements 11 in das Filtergehäuse 2 ist das Gehäuseteil 3a zunächst auf der in der Figur 6 dargestellten Stirnseite 2f offen und wird dann während der Herstellung des Kraftstofffilters 31 mit dem Deckel 3f verschlossen.

Am Deckel 3f ist der Anschluss 4 für den Kraftstoffeinlass vorgesehen. Am Deckel 3f hat es den elektrischen Anschluss 5 für die Heizeinheit 35, den elektrischen Anschluss 6 für den Temperatursensor 36 und den elektrischen Anschluss 29 für den Wasserstandsensor. An der flachen unteren Seitenwand 2b des Kraftstofffilters 31 ist der bei Bedarf öffenbare Wasserauslass 7 vorgesehen.

Wie die Figur 7 zeigt, hat das Filtergehäuse 2 auf der der deckelseitigen Stirnseite 2f gegenüberliegenden Stirnseite 2e zwei Anschlüsse 8a und 8b. Beide Anschlüsse 8a und 8b dienen als Kraftstoffauslass. Im Normalbetrieb des Kraftstofffilters 31 kommt der gefilterte Kraftstoff nur aus einem der beiden Anschlüsse 8a oder 8b. Wenn jedoch aufgrund zu starker Verschmutzung der Druck in dem Filtergehäuse 2 zu stark ansteigen würde, dann öffnet innerhalb des Filtergehäuses 2 ein Überströmventil, so dass der Kraftstoff unter Umgehung des Filterelements 11 aus dem Filtergehäuse 2 ausströmen kann.

Während der Benutzung des Kraftstofffilters gelangt der Kraftstoff zunächst durch den als Kraftstoffeinlass dienenden Anschluss 4 durch den Deckel 3f in ein im Filtergehäuse 2 im Bereich des Deckels 3f vorgesehenen Einsatz 33. Der Einsatz 33 bildet im Bereich des dem Kraftstoffeinlass dienenden Anschlusses 4 einen Hohlraum, in dem beispielsweise eine Heizeinheit 35 und ein Temperatursensor 36 vorgesehen sind. Die Heizeinheit 35 ist über den elektrischen Anschluss 5 und der Temperatursensor 36 ist über den elektrischen Anschluss 6 elektrisch angeschlossen. Innerhalb des Einsatzes 33 wird der Kraftstoff verwirbelt, so dass ein guter Wärmeübergang zwischen der Heizeinheit 35 bzw. dem Temperatursensor 36 und dem Kraftstoff gewährleistet ist.

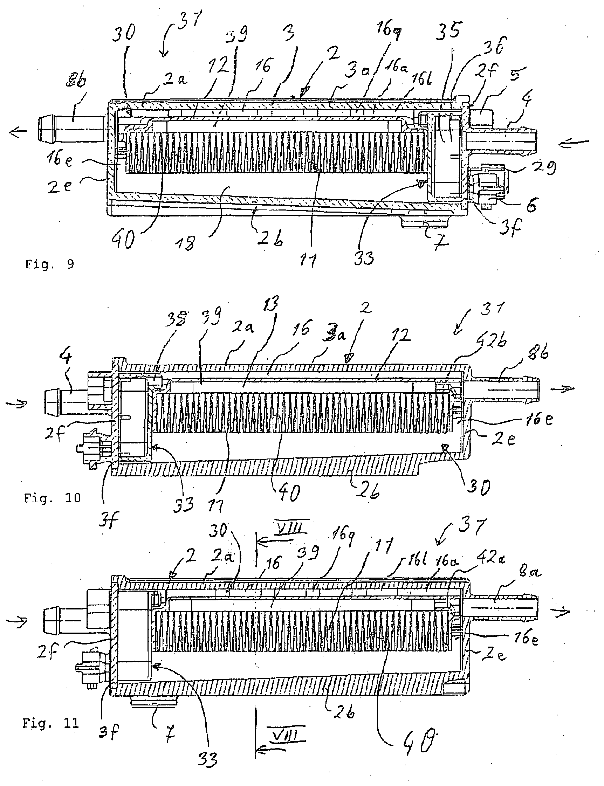

Aus dem Inneren des Einsatzes 33 gelangt der Kraftstoff über eine Öffnung 38 (Fig. 10) in den Spalt 16. In horizontaler Richtung nebeneinander können mehrere Öffnungen 38 vorgesehen sein, oder die Öffnung 38 kann ein sich in horizontale Richtung erstreckendes Langloch sein. Der Spalt 16 hat mehrere Abschnitte, einen oberen Spaltbereich 16a, zwei seitliche Spaltbereiche 16c und 16d (Fig. 8) und einen stirnseitigen Spaltbereich 16e (Fig. 9). Zunächst gelangt der Kraftstoff durch die Öffnung 38 in den oberen Spaltbereich 16a. Der obere Spaltbereich 16a erstreckt sich über fast die gesamte Länge und Breite des Filtergehäuses 2. Der erste seitliche Spaltbereich 16c verbindet im Bereich der seitlichen Längswand 2c den oberen Spaltbereich 16a mit dem Bodenbereich 18. Der zweite seitliche Spaltbereich 16d verbindet im Bereich der seitlichen Längswand 2d den oberen Spaltbereich 16a mit dem Bodenbereich 18. Der stirnseitige Spaltbereich 16e verbindet im Bereich der Stirnseite 2e den oberen Spaltbereich 16a mit dem Bodenbereich 18. Gegebenenfalls kann auf den Spaltbereich 16e verzichtet werden und/oder es kann im Bereich der Stirnseite 2f, entlang des Einsatzes 33, ein den oberen Spaltbereich 16a mit dem Bodenbereich 18 verbindender, nicht dargestellter Spalt vorgesehen sein. Die Spaltbereiche 16a, 16c, 16d, 16e führen den Kraftstoff um das Filterelement 11 herum in den Bodenbereich 18. Aufgrund der verteilten Spalte 16c, 16d und 16e gelangt der Kraftstoff aus dem oberen Spaltbereich 16a gleichmäßig verteilt in den Bodenbereich 18. Die Wandung 12 sorgt dafür, dass der Kraftstoff nicht unmittelbar das Filterelement 11 erreicht, sondern der Kraftstoff muss sich im Wesentlichen über die gesamte Länge des blockartigen Kraftstofffilters 31 ausbreiten.

Bei allen ausgewählten Ausführungsbeispielen können im Spalt 16, vorzugsweise im oberen Spaltbereich 16a, Längsrillen 161 und Querrillen 16q oder sonstige Rillen vorgesehen sein, wie anhand des ersten Ausführungsbeispiels erläutert. Auch in den seitlichen und stirnseitigen Spaltbereichen 16c, 16d, 16e können entsprechende, den Kraftstoff verteilende Rillen angebracht sein.

Die Führungsschienen 15 zwischen dem Filterelement 11 und dem Filtergehäuse 2 sind kurz und mehrfach unterbrochen, so dass die Führungsschienen 15 das Strömen des Kraftstoffs durch die Spalte praktisch nicht behindern.

Über die gesamte Länge des Spaltbereichs 16a gleichmäßig verteilt zweigt der Kraftstoff aus dem oberen Spaltbereich 16a in die seitlichen Spaltbereiche 16c, 16d und 16e. Dort strömt der Kraftstoff zwischen dem Filtergehäuse 2 und der das Filterelement 11 dort umschließenden Wandung 12 in den Bodenbereich 18 unterhalb des Filterelements 11.

Der Querschnitt des Bodenbereichs 18 unterhalb des Filterelements 11 ist wesentlich größer als der Querschnitt des Spalts 16. Wegen dem relativ engen Spalt 16 mit den Bereichen 16a, 16c, 16d und 16e wird dafür gesorgt, dass der Kraftstoff über die gesamte Länge des Kraftstofffilters 31 verteilt in den Bodenbereich 18 einströmt. Dadurch wird erreicht, dass jeder Bereich des Filterelements 11 vom Kraftstoff praktisch gleich intensiv angeströmt wird. Dies ergibt eine gute Nutzbarkeit des Volumens des Filterelements 11.

Der relativ große Querschnitt des Bodenbereich 18 begünstigt die Wasserabscheidung des Kraftstofffilters 31.

Weil der Bodenbereich 18 einen relativ großen Querschnitt hat, wird erreicht, dass sich der Kraftstoff im Bodenbereich 18 beruhigt und ohne größere Verwirbelung aus dem Bodenbereich 18 durch das Filterelement 11 hindurch von unten nach oben in einen Hohlraum 39 strömen kann. Der Hohlraum 39 erstreckt sich oberhalb des Filterelements 11 zwischen dem Filterelement 11 und der Wandung 12 praktisch über die gesamte Länge und Breite des Filterelements 11. Der Hohlraum 39 gehört zur Reinseite 13 des Kraftstofffilters 31.

Aus dem Hohlraum 39 gelangt der Kraftstoff durch einen Durchlass 42a zum Anschluss 8a bzw. durch einen Durchlass 42b zum Anschluss 8b.

Die Spalt 16 und der Bodenbereich 18 sind so hintereinander geschaltet und so aufeinander abgestimmt, dass diese Teile innerhalb des Filtergehäuses 2 zusammen eine hervorragend wirkende zulaufseitige Verteil-Beruhigtingseinrichtung 30 bilden. Bei den ausgewählten Ausführungsbeispielen hat der Spalt 16 die Bereiche 16a, 16b, 16c, 16e und aufeinander abgestimmte Rillen 161 und 16q. Der Querschnitt des Spalts 16 ist so eng, dass der Kraftstoff gleichmäßig verteilt in den Bodenbereich 18 strömt. Weil der Kraftstoff gleichmäßig verteilt in den Bodenbereich 18 strömt, erreicht man, dass der Kraftstoff auf kürzestem Weg mit geringer Geschwindigkeit direkt zum nächstliegenden Bereich des Filterelements 11 strömt, und man erreicht, dass durch jeden Bereich des Filterelements 11 die weitgehend gleiche Kraftstoffmenge hindurchströmt.

Wie man in den Figuren 9, 10 und 11 erkennen kann, besteht das Filterelement 11 im Wesentlichen aus einem gefalteten Filtermaterial 40. Das gefaltete Filtermaterial 40 ist blattartig und hat, je nach zu filterndem Medium, eine Dicke von ungefähr 0,3 mm bis 1,5 mm, vorzugsweise 0,5 mm bis 1,0 mm, insbesondere 0,7 bis 0,8 mm. Das Filtermaterial 40 ist so gefaltet, dass es im Bereich des unteren Endes des Filterelements 11 und im Bereich des oberen Endes des Filterelements 11 um nahezu 180° umgefaltet ist. Durch diese Faltung wird das Filterelement 11 insgesamt relativ steif, und man erhält insgesamt eine große Oberfläche zum Zurückhalten von Schmutz. Wie man in der Zeichnung sieht, verlaufen die Falten des gefalteten Filtermaterials 40 quer zur Längsrichtung des Filtergehäuses 2, d.h., die Falten verlaufen parallel zu den Stirnseiten des Filtergehäuses 2.

## Patentansprüche

1. Kraftstofffilter mit einem Filtergehäuse und mindestens einem darin angeordneten Filterelement, mit mindestens zwei Anschlüssen (4, 8, 8a, 8b), wobei mindestens einer der Anschlüsse als Kraftstoffeinlass und mindestens einer der Anschlüsse als Kraftstoffauslass dienen und wobei das Filterelement (11) flach ausgebildet ist, wobei das Filterelement (11) ein gefaltetes Filtermaterial (40) enthält,
**dadurch gekennzeichnet, dass**
das Filterelement (11) eine gekapselte Reinseite (13) hat, die mit dem dem Kraftstoffauslass dienenden Anschluss (8, 8a, 8b) verbunden ist,
wobei das gekapselte Filterelement (11) weitestgehend vollständig von der Schmutzseite (16, 18) des Filters umgeben ist.

2. Kraftstofffilter nach Anspruch 1, **dadurch gekennzeichnet, dass** das Filtermaterial (40) im Wesentlichen blockförmig gefaltet ist.

3. Kraftstofffilter nach einem der Ansprüche 1 oder 2, **gekennzeichnet durch** zwei oder mehr Filterelemente.

4. Kraftstofffilter nach einem der Ansprüche 1 bis 3, **dadurch gekennzeichnet, dass** mindestens einer der Anschlüsse (4, 8, 8a, 8b, 21, 22, 23) an einer Stirnseite (2e, 2f) des Filtergehäuses (2) angeordnet ist.

5. Kraftstofffilter nach Anspruch 4, **dadurch gekennzeichnet, dass** mindestens zwei der Anschlüsse (4, 8) an gegenüberliegenden Stirnseiten (2e, 2f) des Filtergehäuses (2) angeordnet sind.

6. Kraftstofffilter nach einem der vorhergehenden Ansprüche, **gekennzeichnet durch** eine Strömungseinleitung, **durch** die im Bereich der Anströmseite des Filterelements (11) Turbulenzen zumindest verringert werden.

7. Kraftstofffilter nach Anspruch 6, **gekennzeichnet durch**
eine an dem dem Kraftstoffeinlass dienenden Anschluss (4) vorgesehene Strömungsplatte.

8. Kraftstofffilter nach Anspruch 7, **dadurch gekennzeichnet, dass**
die Strömungsplatte in Strömungsrichtung schräg nach oben gerichtet ist.

9. Kraftstofffilter nach einem der vorhergehenden Ansprüche, **dadurch gekennzeichnet, dass**
das Filtergehäuse (2) ein blockförmiges Gehäuseteil (3a) und einen das Gehäuseteil (3a) abschließenden Deckel (3f) umfasst.

10. Kraftstofffilter nach Anspruch 9, **dadurch gekennzeichnet, dass**
das Gehäuseteil (3a) und der Deckel (3f) über eine unlösbare Verbindung miteinander verbunden sind.

11. Kraftstofffilter nach einem der vorhergehenden Ansprüche, **dadurch gekennzeichnet, dass**
der Kraftstofffilter eine zulaufseitige Verteil-Beruhigungseinrichtung (30) aufweist.

## Claims

1. Fuel filter having a filter housing and at least one filter element arranged therein, and having at least two ports (4, 8, 8a, 8b), wherein at least one of the ports serves as a fuel inlet and at least one of the ports serves as a fuel outlet and wherein the filter element (11) is of flat form, wherein the filter element (11) comprises a folded filter material (40), **characterized in that**
the filter element (11) has an encapsulated clean side (13) which is connected to the port (8, 8a, 8b) which serves as the fuel outlet,
wherein the encapsulated filter element (11) is surrounded as completely as possible by the dirty side (16, 18) of the filter.

2. Fuel filter according to Claim 1, **characterized in that** the filter material (40) is folded so as to be substantially in the form of a block.

3. Fuel filter according to either of Claims 1 and 2, **characterized by** two or more filter elements.

4. Fuel filter according to one of Claims 1 to 3, **characterized in that** at least one of the ports (4, 8, 8a, 8b, 21, 22, 23) is arranged on an end side (2e, 2f) of the filter housing (2).

5. Fuel filter according to Claim 4, **characterized in that** at least two of the ports (4, 8) are arranged on opposite end sides (2e, 2f) of the filter housing (2).

6. Fuel filter according to one of the preceding claims, **characterized by** a flow introduction arrangement by means of which turbulence is at least reduced in the region of the incident-flow side of the filter element (11).

7. Fuel filter according to Claim 6, **characterized by** a flow baffle provided at the port (4) which serves as the fuel inlet.

8. Fuel filter according to Claim 7, **characterized in that** the flow baffle is directed obliquely upwards in the flow direction.

9. Fuel filter according to one of the preceding claims, **characterized in that** the filter housing (2) comprises a block-shaped housing part (3a) and a cover (3f) which closes off the housing part (3a).

10. Fuel filter according to Claim 9, **characterized in that** the housing part (3a) and the cover (3f) are connected to one another by means of a non-detachable connection.

11. Fuel filter according to one of the preceding claims, **characterized in that** the fuel filter has an inflow-side distribution and calming device (30).

## Revendications

1. Filtre à carburant comprenant un boîtier de filtre et au moins un élément de filtre disposé dans celui-ci, comprenant au moins deux raccords (4, 8, 8a, 8b), au moins l'un des raccords servant d'entrée de carburant et au moins l'un des raccords servant de sortie de carburant et l'élément de filtre (11) étant réalisé sous forme plate, l'élément de filtre (11) contenant un matériau filtrant plié (40),
**caractérisé en ce que**
l'élément de filtre (11) a un côté propre encapsulé (13), qui est connecté au raccord (8, 8a, 8b) servant de sortie de carburant, l'élément de filtre encapsulé (11) étant entouré essentiellement en totalité par le côté sale (16, 18) du filtre.

2. Filtre à carburant selon la revendication 1, **caractérisé en ce que** le matériau de filtre (40) est plié sensiblement en forme de bloc.

3. Filtre à carburant selon l'une quelconque des revendications 1 ou 2, **caractérisé par** deux ou plus de deux éléments de filtre.

4. Filtre à carburant selon l'une quelconque des revendications 1 à 3, **caractérisé en ce qu'**au moins l'un des raccords (4, 8, 8a, 8b, 21, 22, 23) est disposé sur un côté frontal (2e, 2f) du boîtier de filtre (2).

5. Filtre à carburant selon la revendication 4, **caractérisé en ce qu'**au moins deux des raccords (4, 8) sont disposés sur des côtés frontaux opposés (2e, 2f) du boîtier de filtre (2).

6. Filtre à carburant selon l'une quelconque des revendications précédentes, **caractérisé par** une conduite d'amenée de carburant, qui permet au moins de réduire les turbulences dans la région du côté d'afflux de l'élément de filtre (11).

7. Filtre à carburant selon la revendication 6, **caractérisé par** une plaque d'écoulement prévue sur le raccord (4) servant d'entrée de carburant.

8. Filtre à carburant selon la revendication 7, **caractérisé en ce que** la plaque d'écoulement est orientée obliquement vers le haut dans la direction d'écoulement.

9. Filtre à carburant selon l'une quelconque des revendications précédentes, **caractérisé en ce que** le boîtier de filtre (2) comprend une partie de boîtier (3a) en forme de bloc et un couvercle (3f) fermant la partie de boîtier (3a).

10. Filtre à carburant selon la revendication 9, **caractérisé en ce que** la partie de boîtier (3a) et le couvercle (3f) sont connectés l'un à l'autre par le biais d'une connexion inamovible.

11. Filtre à carburant selon l'une quelconque des revendications précédentes, **caractérisé en ce que** le filtre à carburant présente un dispositif (30) servant à stabiliser la distribution du côté de l'afflux.
